(19) Europäisches Patentamt
European Patent Office
Office européen des brevets

(11) **EP 1 509 063 B1**

(12) **EUROPEAN PATENT SPECIFICATION**

(45) Date of publication and mention
of the grant of the patent:
**20.04.2011 Bulletin 2011/16**

(51) Int Cl.:
*H04R 5/02* (2006.01)          *H04N 5/64* (2006.01)
*H04R 1/34* (2006.01)

(21) Application number: **03018665.4**

(22) Date of filing: **21.08.2003**

(54) **Sound generating device with high frequency sound deflector array**

Schallerzeugungseinrichtung mit einem Array zur Ablenkung von Schallsignalen hoher Frequenz

Appareil de génération sonore avec un réseau de déflecteurs sonores pour les hautes fréquences

(84) Designated Contracting States:
**DE FR GB TR**

(43) Date of publication of application:
**23.02.2005 Bulletin 2005/08**

(73) Proprietor: **Vestel Elektronik Sanayi ve Ticaret A.S.**
**45030 Manisa (TR)**

(72) Inventor: **Yuksel, Volkan**
**45040 Manisa (TR)**

(74) Representative: **HOFFMANN EITLE**
**Patent- und Rechtsanwälte**
**Arabellastraße 4**
**81925 München (DE)**

(56) References cited:
**EP-A- 0 492 919      JP-A- 61 184 093**
**US-A- 3 557 324      US-A- 4 625 829**

- **PATENT ABSTRACTS OF JAPAN vol. 007, no. 013 (E-153), 19 January 1983 (1983-01-19) & JP 57 170693 A (TAKASHI SATOU), 20 October 1982 (1982-10-20)**
- **PATENT ABSTRACTS OF JAPAN vol. 2002, no. 08, 5 August 2002 (2002-08-05) & JP 2002 101364 A (MATSUSHITA ELECTRIC IND CO LTD), 5 April 2002 (2002-04-05)**

**Description**

**Technical field of the invention**

The present invention relates to audio/video equipment employing at least one sound generating device, and in particular to a sound generating device using an acoustic coupling between a sound generator and a guiding means for deflecting sound waves.

**Description of related art**

A conventional sound generating device for audio/video equipment, e.g. for a television set, consists of a sound generator formed as a loudspeaker and a transducer formed as a voice coil of the loudspeaker.

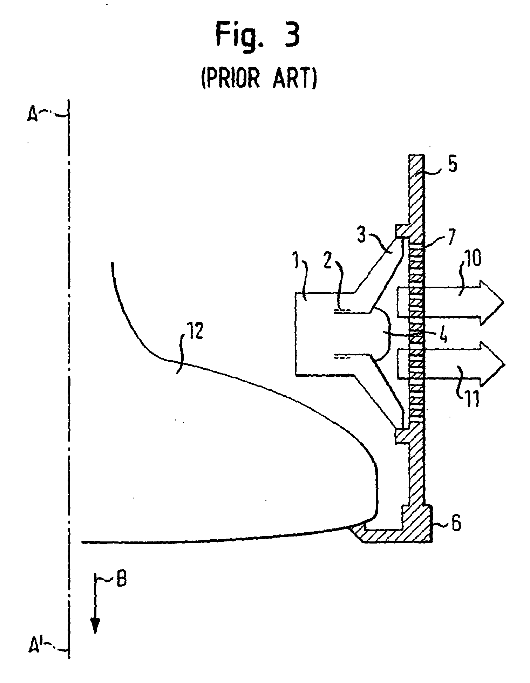

As shown in Fig. 3 the conventional sound generating device emits sound in a direction shown by the arrows 10, 11 which does not coincide with the viewing direction B referred to a person sitting in front of the television set.

In Fig. 3 one half of a television set comprising an image generating device 12, e.g. a cathode ray tube (CRT) is shown. The sound generating device consists of the sound generator 1, the transducer 2 and a membrane 3, wherein the transducer is covered by a cover 4.

Due to space limitations in the housing 5, 6 of a conventional television set the sound generating system has to be arranged within the housing 5, 6 such that the sound generating system emits sound waves 10, 11 to the side of the television set, i.e. perpendicular to the viewing direction B in the present case. Nevertheless, it is preferred to hear sound in the viewing direction because a listener will sit somewhere in front of the television set along the axis A-A'. The housing 5, 6 comprises a grill 7 in front of the sound generating device in order to permit sound waves 10, 11 to be transmitted to the outside of the housing.

A listener in front of the image generating device 12 may receive the sound waves 10, 11 emitted to the side of the television set via reflections in the environment of the television set.

It is a disadvantage that conventional sound generating devices have a directionality which is frequency-dependent. One reason for this frequency-dependent directionality in outputting sound waves is that lower frequencies exhibit propagation properties comprising diffraction while higher exhibit less diffraction during propagation.

An ideal loudspeaker frequency response is flat over the whole audio spectrum and it also exhibits a flat frequency response in all directions. It is preferred, that loudspeaker systems are mounted at the front side of a television set in order to permit frequencies to be delivered to a listener without a major obstacle. A person who is in front of the television set receives all frequencies emitted by the loudspeaker system at a constant level with a flat frequency response.

It is a disadvantage, however, that in television sets where the overall dimensions of the housing have to be reduced, the loudspeakers have to be mounted at the sides resulting in a situation that the cones of the loudspeaker system do not face towards the front side of the television set. Such a mounting of loudspeakers into the housing is convenient because a additional increase in width of the television set is avoided. A disadvantage of such a mounting is that the level of high frequencies that a listener sitting in front of the television set can hear is significantly reduced.

In general loudspeaker systems are omni-directional at low frequencies and highly directional for frequencies in the higher frequency range. When the loudspeakers are facing to a direction other than the viewing direction the emitted high frequencies are absorbed during multiple reflections among objects in the environment of the television set before they can reach the listener.

Furthermore, the reduced level of higher harmonics reduces the perceived fidelity and quality of the emitted sound. The conventional arrangement of the loudspeaker system is especially not suitable for speech comprehension by a person who is watching the television from the front side of the television set. A person who is having difficulties in perceiving what he or she is hearing has to increase the sound volume. As the level of low frequencies is also increased in this way a so-called sound pollution may occur.

In order to improve the sound quality of television sets sound-reflecting side walls have been proposed and disclosed in US 5,452,025. Here, a well-known horn-shaped sound guiding cavity with reflecting walls for the partial reflection of high frequencies is provided. The disclosed arrangement aims at obtaining desired levels of higher frequencies in front of the television set without placing the loudspeakers at the front side of the television set but rather inside the housing.

The disclosed arrangement is adapted to reflect high frequencies to the front side of the television set but it is a disadvantage that the reflecting side walls and the wave guiding result in a damping of the high frequency sound waves. Furthermore, the reflection of sound waves around the cathode ray tube of the television set leads to an expensive sound reflection arrangement. It is thus an advantage of the arrangement disclosed in US 5,452,025 that an ineffective sound reflection arrangement is provided at high cost. Furthermore, it is a disadvantage that a mounting of the loudspeakers inside the cabinet requires additional mounting elements since the loudspeakers are not directly mounted to the walls of the housing of the television set.

Another conventional television receiver loudspeaker device is disclosed in EP 0 492 919 A2. Here, a stereo loudspeaker system is mounted within the housing of a television set. The loudspeakers are mounted such that the size of the housing of the television set is not increased. The loudspeakers are arranged at the back of a television screen surface wherein sound reflectors are provided for reflecting the sound from the loudspeakers substantially in a forward direction from the television screen surface. Furthermore, acoustic lenses are provided on the surface coplanar with the television screen surface for controlling the sound radiating direction. It is a disadvantage of the arrangement disclosed in EP 0 492 919 A2 that there is a significant cost increase resulting from the installation of additional baffles and fins as well as acoustic lenses. Another disadvantage is that conventional arrangements are only applicable to large size television sets.

It is desirable that the sound emitted by a television receiver appears to be radiated from the vicinity of the image displayed by an image generating device.

A further design consideration is that it is also desirable that even if the screen has a large surface the housing of the television set itself should not be excessively increased in size. Furthermore, it is important that a reduced level of high frequency audio signals is avoided even in inexpensive television sets where the loudspeakers are placed at the sides and are mounted such that the sound emitting axis of the loudspeakers is essentially perpendicular to the observation axis of the image generating device.

An apparatus and method for generating sound according to the preambles of the independent claims is known from the document JP 61184093 A.

## Summary of the invention

It is thus an object of the present invention to provide a sound generating device being mounted into the housing of a image generating device wherein sound waves are directed towards a listener located in front of the image generating device without increasing expenses for mounting the sound generating device to the housing of the image generating device.

This object is achieved by the sound generating device with the features of claim 1.

Furthermore the object is achieved by a method according to claim 21.

Further advantages and embodiments are according to the dependent claims.

An essential idea of the invention is to provide a sound generating device which is arranged in a housing together with an image generating device such that the overall size of the housing is reduced.

The inventive sound generating device comprises a sound generator which is arranged in said housing and which is provided with at transducer for generating sound waves in response to an input signal, wherein the sound generating device further includes at least one guiding means for guiding generated sound waves to the outside of the housing, wherein the guiding means is arranged close to said transducer of the sound generator such that an acoustic coupling between the sound generator and the guiding means is provided and generated sound waves are deflected by the guiding means into a predetermined deflection angle.

The reflective and/or diffractive elements of the guiding means are arranged such that the deflection angle provided by the respective elements decreases in propagation direction of the sound waves with respect to an observation axis.

It is an advantage of the present invention that a deflection angle can be provided according to the requirements of an installation of the sound generating device in the housing.

It is a further advantage of the present invention that the guiding means are small compared to conventional guiding means and the guiding means are arranged close to the sound generator such that an acoustic coupling between the sound generator and the guiding means is provided.

The principle of the invention is that the guiding means provide a deflection of sound waves by the effects of diffraction and/or reflection. Especially the deflection of high frequencies towards the front of the television set using the inventive guiding means is important as high frequencies must not be deflected by the environment of the television set as it is desirable that the high frequency sound of a television receiver appears to be radiated from the vicinity of the displayed image.

Sound waves having a high frequency and a high intensity are generated close to the transducer of a sound generator in a sound generating device. Thus the present invention provides an acoustic coupling of high frequency waves between the sound generator and the guiding means if the transducer of the sound generator is arranged close to the guiding means.

An acoustic coupling between the sound generator and the guiding means occurs, if a diffraction of the sound waves emitted by the transducer can be provided by the guiding means. The direction of waves into a predetermined deflection angle is based on interference effects such that a plane sound wave interferes with a guiding means having structure sizes in the order of the wavelength of the high frequency sound waves. Thus an acoustic coupling between the sound generator and the guiding means can be provided if the transducer is arranged close to the guiding means such that a plane wave front of the sound waves can be diffracted into an arbitrary deflection angle. This deflection angle can be determined by the structure sizes of the guiding means.

Additionally reflection occurs at the guiding means resulting in a further degree of freedom in order to deflect the sound waves. Due to the adjustable deflection angle the overall dimensions of the housing can be reduced, if the sound generating devices are mounted such that they emit sound waves towards sides of the housing.

A further advantage of the present invention is that material costs are reduced due to smaller reflector surfaces compared to arrangements of prior art. As the guiding means is arranged close to the sound generator injection moulding of the guiding means together with a grill of a loudspeaker of the sound generating device can be provided.

As the guiding means is arranged close to the sound generating device a further cost reduction can be obtained due to the reduced size of baffles and/or fins of the guiding means. Furthermore it is an advantage of the present invention that the inventive guiding means and/or the inventive sound generating device can be attached to existing television sets that have speakers facing the sides in order to improve their sound performance.

It is an advantage that the reflecting/diffracting elements of the guiding means can be designed in such a way that they provide an additional structural strength such that inference based on resonance effects of the grill or a grid or a grill mesh in front of the loudspeaker are prevented. As the inventive guiding means is especially adapted to high frequency waves the speech-based television programs like news can be heard by a listener in front of the screen of the television set without the need for increasing the volume level. Any absorption of high frequency waves in the environment of the television set is prevented using the inventive guiding means.

As far as the attachment of the sound generating device to the housing of a television set is concerned, the housing can be made by a much simpler production process. Furthermore it is an advantage that no lengthy cavities are required in front of the sound generating device, like in arrangements of prior art which would lead to resonance or dispersion effects caused by the respective cavities. Moreover it is a major advantage of the present invention that the sound generating devices themselves need not to be screwed to the housing for attaching them to the housing.

In fact the sound generating devices may be attached in a housing when the front and near parts of the housing are assembled. A grid in front of the sound generating device may change a frequency-dependent sound transmission according to the grid geometry. Because of the limitations of injection moulding processes the grid cannot be fabricated fully transparent to all frequencies. Within the areas covered by the reflected surfaces the grid geometry can be arranged such that it becomes less restricting to sound waves that are passing through the grid.

A further advantage of the present invention is that the guiding means provides an additional rigidity to the grid such that unwanted resonance effects are reduced or eliminated.

It is useful if the guiding means is built as one part together with the grid in front of the sound generating device. The guiding means e.g. consists of reflecting fins or baffles integrated with the grid. It is preferable that the inventive diffraction principle for deflecting sound waves is combined with the reflection principle in order to provide a specific deflection angle.

The sound generating devices according to the present invention essentially comprises a housing, in which an image generating device is arranged, whereby the sound generating device further includes a sound generator which is arranged in said housing and provided with a transducer for generating sound waves in response to an input signal, and at least one guiding means for guiding the generated sound waves to the outside of the housing, wherein the guiding means is arranged close to the transducer of the sound generator such that an acoustic coupling between the sound generator and the guiding means is provided, and the generated sound waves are deflected by the guiding means into a predetermined deflection angle.

A method for generating sound waves according to the present invention essentially includes the following steps: providing an input signal for a transducer of the sound generator which is arranged in a housing; converting the input signal into at least one sound wave by means of the transducer; and guiding the sound wave to the outside of the housing by at least one guiding means, wherein the guiding means is acoustically coupled to the transducer of the sound generator; and the generated sound waves are deflected by a predetermined deflection angle using the guiding means.

According to an aspect of the present invention the sound generator of the sound generating device comprises at least one loudspeaker for generating audible sound.

According to another aspect of the present invention a diffuser element is provided facing the transducer of the sound generator such that high frequency sound waves are reflected back to the transducer. Preferably the back-reflection of the sound waves results in an improved acoustic coupling between the sound generator and the guiding means.

According to yet another aspect of the present invention a grill is provided between the sound generator and the guiding means for transmitting generated sound waves to the outside of the housing. Preferably the grill consists of a grid or a mesh. It is advantageous if the grill is fabricated together with the guiding means as a single element.

It is a further advantage if the grill is provided as a diffractive element for diffracting the generated sound waves into a predetermined deflection angle. Thus, it is preferable that the diffracting grill cooperates with the guiding means as a sound deflection device.

According to yet another aspect of the present invention the input signal is an electrical signal the energy of which is operating the transducer of the sound generator for generating sound waves. Preferably the transducer is arranged close to the guiding means in order to provide an efficient acoustic coupling between the sound generator and the guiding means resulting in an effective diffraction efficiency.

It is advantageous that the transducer is provided as a voice coil and is capable of generating sound waves at high frequencies. Furthermore it is preferable that the grill and the guiding means can be fabricated as a single component.

According to yet another aspect of the present invention the guiding means is variable for an adjustment of the deflection angle and/or a directionality of the transmitted sound waves. It is preferred that the diffracting properties of the grid cooperate with the diffracting properties of the guiding means in order to provide a desired deflection angle. According to yet another aspect of the present invention the guiding means consists of at least one diffractive element for diffracting sound waves to respective deflection angles. Thus, it is an advantage that the deflection angle can be optimized for a listener located in front an image generating device.

According to yet another aspect of the present invention the guiding means consists of at least one reflective element for reflecting the sound waves into the respective deflection angles. It is preferable that the diffracting properties of the grid and the diffractive elements of the adapting means cooperate with the reflecting properties of the guiding means in order to provide a desired deflection angle.

According to yet another aspect of the present invention the guiding means comprises an acoustic lens. Advantageously the acoustic lens focuses the diverging sound waves onto diffractive and/or reflective elements of the guiding means in order to enhance the deflection efficiency of the sound deflection device including the guiding means and the grid in front of the sound generating device.

According to yet another aspect of the present invention the guiding means consists of an array of reflective and/or diffractive elements. Preferably the reflective and/or diffractive elements of this array of the guiding means are arranged such that the area of the respective elements decreases in propagation direction of the sound wave. If an array of reflective and/or diffractive elements is used the elements are arranged as close as possible to the transducer of the sound generating device where the high frequencies generated by the sound generating device have the highest intensity.

It is a specific advantage of the preferred embodiment according to the present invention that the diffractive and/or reflective elements of the guiding means can be provided with reduced areas compared to deflection arrangements of prior art, because the guiding means is arranged in close proximity to the transducer coil of the sound generating device. It is preferred that the diffractive and/or reflective elements of the guiding means are gradually reduced in size toward the front direction of a television set where they are used. The reflective and/or diffractive elements of the guiding means are arranged such that the deflection angle provided by the respective elements decreases in propagation direction of the sound waves with respect to an observation axis.

It is preferred that the reflective and/or diffractive elements of the guiding means which are located nearer to a listener provide a higher deflection angle than the diffractive and/or reflective elements of the guiding means are located far away from the listener.

It is an advantage if the reflective and/or diffractive elements of the guiding means are convex-shaped. It is preferred that the diffractive and/or reflective elements of the guiding means are provided as fins and/or baffles. Furthermore, it is an advantage if the reflective and/or diffractive elements of the guiding means have a curved surface structure.

According to a preferred embodiment of the present invention a deflection angle provided by the reflective and/or diffractive elements of the guiding means for deflecting the sound waves varies between 0 degrees and less than 90 degrees with respect to the observation axis.

It is preferred that the guiding means is an injection-moulded portion of the housing and/or grill.

## Brief description of the drawings

Embodiments of the present invention are depicted in the drawings and are explained in more detail in the following description.

In the drawings:

Fig. 1      illustrates the principle set-up of a television set with two sound generators facing sidewards equipped with respective sound deflection devices according to a preferred embodiment of the present invention;

Fig. 2a    shows a sound deflection device shown in Fig. 1 in more detail according to a preferred embodiment of the present invention;

Fig. 2b    shows the sound deflection device of Fig. 1 illustrating in detail the deflection angles provided a guiding means according to the present invention; and

Fig. 3 represents a conventional sound generating device.

Same reference numerals refer to same or similar elements in the drawings.

**Detailed description of preferred embodiments**

The present invention now will be described more fully hereinafter with reference to the accompanying drawings, in which preferred embodiments of the invention are shown.

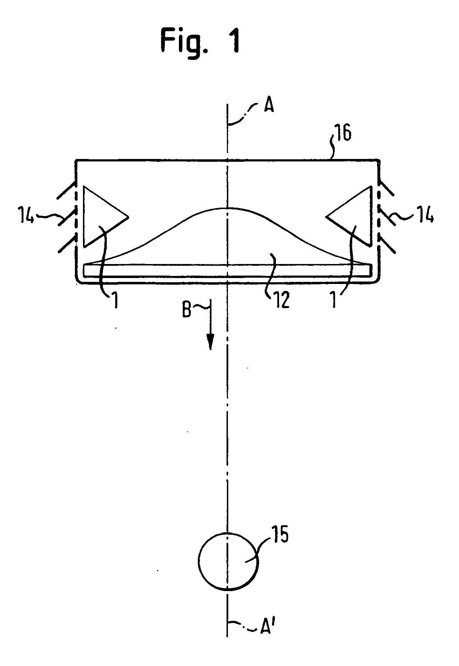

Fig. 1 is an illustrative overview of a preferred embodiment of the present invention. A listener 15 is located in front of a television set 16 watching an image displayed by an image generating device 12 of the television set 16. An optimum position for the listener 15 would be somewhere along the axis A-A' shown in Fig. 1. An estimation for the optimum viewing distance is given e.g. by the following equation: a distance (front side of the television set 16 to listener 15) = 7 x dimension of the diagonal of the screen of the image generating device 12. According to the preferred embodiment of the present invention shown in Fig. 1 two sound generators 1 are provided emitting sound waves to the left and right sides of the housing of the television set 16.

Such an arrangement of the sound generators 1 with respect to the image generating device 12 results in a reduced overall size of the housing where the sound generators 1 and the image generating device 12 are accommodated. In most small-scale television sets and in television sets where a reduced size of the housing is desired it is not permitted to install the sound generators 1 at the front side of the housing where the image generating device 12 is located. Thus, in the embodiment shown in Fig. 1 sound waves are emitted to the sides of the housing, i.e. to the left side and to the right side as shown in Fig. 1.

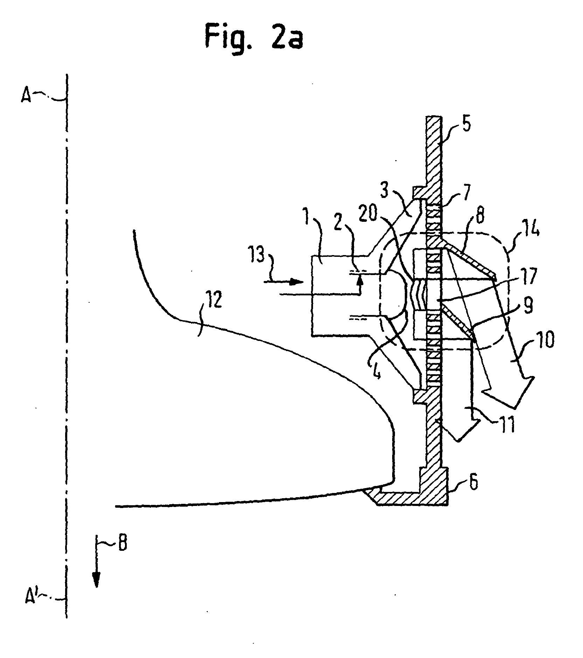

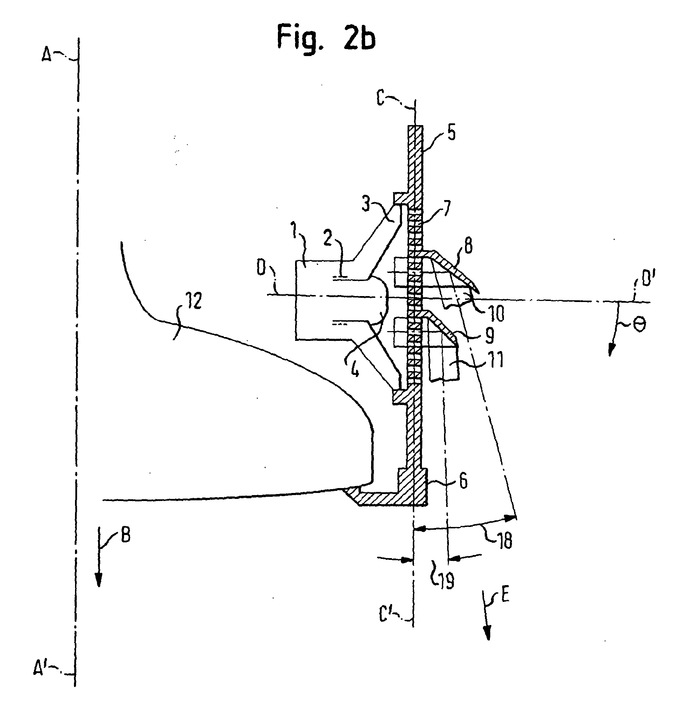

According to a preferred embodiment of the present invention two sound deflection devices are provided at locations where the sound is output from the housing at the left and right sides of the housing. The sound deflection devices 14 are described in more detail hereinafter with reference to Figs. 2a and 2b. It is preferred that the direction of the sound waves emitted from the sound generators 1 coincides with a viewing direction B which is parallel to the axis A-A'.

Fig. 2a is a sectional view of a part of a television set. Reference numerals 5 and 6 are the rear and front parts of a housing, respectively. As shown in Fig. 2a a sound generator 1 is facing sidewards whereby sound waves 10, 11 are emitted through a grill 7 which is arranged between the front and rear parts of the housing 5, 6 and facing the sound generator 1. Furthermore, reference numeral 12 illustrates a part of an image generating device, in this case a cathode ray tube (CRT) of a television set.

An arrangement of the sound generator 1 with respect to the image generating device 12, as shown in Fig. 2a, thus is space-saving. Most television sets compact in size have such an arrangement of sound generator(s) 1 with respect to the image generating device 12 (CRT).

A sound deflection device 14 according to a preferred embodiment of the present invention is depicted by a dashed line in Fig. 2a. The inventive sound deflection device 14 essentially consists of a diffuser element 17 and guiding means 8, 9. It is noted that although guiding means 8, 9 are shown one or more guiding means 8, 9 may be provided in order to carry out the inventive method.

The sound generator 1 consists of a transducer 2 and a membrane 3 for generating and emitting the sound waves 10, 11. The transducer 2 is supplied with an input signal 13 which is provided by an electronic circuitry (not shown). The sound waves are generated by the transducer 2 in response to this input signal. The transducer 2 is covered by a cover 4 in order to prevent dust from introducing into the transducer.

The sound generator 1 is mounted inside the housing between the rear part and the front part of the housing 5 and 6 respectively. The housing is an injection-moulded cabinet of the television set. The generated sound waves are radiated into the environment by passing them through the grill 7. The grill is essential for a protection of the membrane from external mechanical damages.

Furthermore it is possible that the grill 7 is a injection-moulded plastic which is a permanent part of the housing 5, 6. Furthermore the grill 7 can be made from any metallic material which has a large amount of openings compared to what is achievable with a plastic part. It is noted that the grill exhibits some frequency-dependent restrictions for passing the generated sound waves through it compared to an open-to-air-condition without any grill 7.

Moreover the elements of the guiding means 8, 9 may be extensions of the grill 7. The diffuser element 17 is provided facing the transducer 2 of the sound generator 1 such that high frequency sound waves 20 are reflected back to the transducer 2.

The back-reflection of high frequency sound waves to the transducer 2 of a sound generator is not feasible in arrangements where the distance between the sound generator and the guiding means is large compared to the wavelengths of the sound waves. The back-reflection to the transducer causes an acoustic coupling between the sound generator 1 and the guiding means 8, 9 such that the sound waves are easily deflected by guiding means into a predetermined deflection angle by use of the diffraction principle, which is explained hereinafter.

A further advantage of the preferred embodiment of the present invention is that the diffuser element 17 may have a small area for the back-reflection of the high frequency sound waves such that the size of the guiding means is reduced. In arrangements according to prior art there is a significant distance between the sound generator 1 and the reflecting surface of the diffuser element 17. Thus an efficient acoustic coupling between a guiding means and a sound generator is not possible in conventional arrangements. The inventive guiding means 8, 9 is structured such that the diffracted and/or reflected sound waves 10, 11 are deflected by a predetermined deflection angle, which is described in more detail with reference to Fig. 2a. The listener 15 (see Fig. 1) is located along the center line A-A' and watches a picture generated by the image generating device 12 which is emitted into the direction indicated by an arrow B. It is especially important that high frequency sound waves appear to originate from the location of the image generating device 12 and are not reflected by the environment of the television set.

For low frequency sound waves, e.g. sound waves for a bass sound it is not such important that the low frequency sound waves are deflected by the guiding means 8, 9. The sound deflection device 14 provides an efficient means for performing an acoustic coupling between the sound generator 1 and the guiding means 8,9.

Fig. 2b illustrates the deflection of generated sound waves 10, 11 by deflection angles 18 and 19, respectively. Same elements as in Fig. 2a are indicated by same reference numerals. The deflection angles 18, 19 are defined as angles between the propagation direction of the respective sound waves 10, 1 and a direction defined by an axis C-C' shown in Fig. 2b. The axis C-C' is essentially parallel to the axis A-A' along which a spectator/listener is expected to be located.

In the following the method for generating sound waves and for deflecting the generated sound waves by the diffraction and/or reflection principle will be explained. The method according to a preferred embodiment of the present invention comprises the guiding of sound waves to the outside of the housing of a television set by at least one guiding means 8, 9 whereby the guiding means 8, 9 is acoustically coupled to the transducer 2 of the sound generator 1 and the generated sound waves are deflected by the predetermined reflection angle 18, 19 using the guiding means 8, 9.

Preferably the high frequency sound waves 20 are reflected back to the transducer 2 by means of a diffusing element 17 which is provided facing the transducer 2 of the sound generator 1. As it is already known to persons skilled in the art sound waves may be diffracted and/or reflected when the respective sound wave encounters an obstacle or edges of an opening. In this case the sound wave bends or diffracts around the edges and/or around obstacles.

The extent of the diffraction and thus the amount of the deflection angle depends on the ratio of the wavelength $\lambda$ of the sound wave to the size D of the obstacle or opening. The wavelength of the sound wave is given by the ratio of the velocity of the sound wave in the respective medium (here: air) to the frequency of the sound wave. If the ratio ($\lambda$/D) is small, little diffraction occurs. With an increase ratio D) the diffraction of the sound wave(s) increases.

For a sound wave having a wavelength $\lambda$ that is passing through a slit that has a width D the relationship for the deflection angle $\theta$ of the first maximum of the intensity of the sound wave is given by the following equation (1):

$$\sin \Theta = \frac{\lambda}{D} \qquad\qquad (1)$$

In case a circular opening is provided for a transmission of the sound waves equation (1) changes into equation (2) which follows from the Bessel functions:

$$\sin \Theta = 1.22 \frac{\lambda}{D} \qquad\qquad (2)$$

where D is the width of the slit or the width of an aperture the sound wave is passing through.

For the following estimation the case of equation (2) for determining a first minimum of the intensity of the deflected sound wave is used because this is the approximate case when a circular sound generator, e.g. a conventional loudspeaker, is mounted to the housing of a television set. Thus a deflection angle $\theta$ as shown in Fig. 2b can be calculated according to equation (2) as follows:

$$\Theta = \arcsin\left[1.22(\lambda / D)\right] \qquad\qquad (3)$$

As mentioned hereinabove the wavelength of the sound wave is the ratio of the sound velocity in the respective medium (air) to the frequency of the sound wave according to equation (4):

$$\lambda = \frac{c_M}{f} \qquad (4)$$

Where $c_M$ is the sound velocity in medium M and f is the frequency of the sound wave. For the present case, i.e. the case where the sound generating device is emitting sound into ambient air the sound velocity is: $c_M$ = 343 meters per second under the environmental conditions of a temperature of 20°C and an ambient pressure of 101325 Pa. Using the known sound velocity $c_M$ and the relation of equation (4), equation (3) becomes:

$$\theta = \text{arcsin} [418.5/f \cdot D)] \qquad (5)$$

For typical dimensions in a television set it is assumed that the width of the circular opening using a full-range loudspeaker is: D = 10 cm; thus yielding

$$\Theta = \text{arcsin}\left[\frac{4185}{f}\right] \qquad (6)$$

The relation according to equation (6) shows that the deflection angle θ is frequency-dependent. For the further estimation a resulting deflection angle 18, 19 is given by:

$$\Theta_{4500} = \text{arcsin}\left[\frac{4185}{4500}\right] = 68.4° \qquad (7)$$

with f = 4500 Hz

For example, if a frequency of f = 9000 Hz is considered as the input frequency using the same D of an opening in front of the sound generator 1 equation (7) changes into equation (8):

$$\Theta = \text{arcsin}\left[\frac{4185}{9000}\right] = 27.7° \qquad (8)$$

As shown in the above calculations it is possible that the deflection angle based on the diffraction principle is decreasing with increasing frequency of the sound waves 10, 11.

It has to be noted that the estimated deflection angle θ is defined by a center line D-D' shown in Fig. 2b. The line D-D' coincides with the axis of the sound generator 1.

In addition to the diffraction principle the reflection principle is also applicable especially for higher sound frequencies. Thus the guiding means 8, 9 provides both deflection of the emitted sound waves 10, 11 by diffraction and reflection.

It is to be noted that the diffraction angle θ according to equation (7) it is assumed to be based only on the diffraction of sound waves. An additional change of a directionality of the emitted sound waves 10, 11 is achieved by reflecting the sound waves at respective baffles and/or fins of the guiding means 8, 9.

Thus the invented method provides a guiding of the sound waves 10, 11 to the outside of a housing 5, 6 of a television set, wherein the generated sound waves are deflected by a predetermined deflection angle using the guiding means because the guiding means is acoustically coupled to the transducer 2 of the sound generator 1.

To this end high frequency sound waves 20 are reflected back to the transducer 2 by means of a diffuser element 17 enhancing the acoustic coupling between the sound generator 1 and the transducer 2. In order to efficiently output the generated sound waves 10, 11 the guiding means 9 being in front of the guiding means 8, as seen in the propagation direction of the sound waves 10, 11 and shown by an arrow B, has to be smaller in size compared to the guiding means 8.

That is, the guiding means 9 has to be arranged such that sound which is diffracted and/or reflected by the guiding means 8 is not bent in the propagation direction by the guiding means 9. In addition to an appropriate use of the size, e.g. the area of the guiding means 8, 9 it is possible to adjust the reflection angle providing a deflection of the sound wave based on the reflection principle by a proper adjustment of the guiding means 8, 9.

Thus, it is possible to choose the respective elements of the guiding means 8, 9 such that little shadowing of the emitted sound waves occurs. The proper adjustment of the deflection angle is such that a deflection angle 18 for a guiding means 8 which is farther away from the listener is larger than a reflection angle 19 of a guiding means 9 which is nearer to the listener. It is noted that the diffraction angle $\theta$ and the respective deflection angles 18, 19 are related to each other by the following equations (9a, 9b) :

$$\left( D - D' \right) \tag{9a}$$

perpendicular to

$$\left| \left( C - C' \right) \right.$$

$$\rightarrow \theta_{10} = 90° - \text{angle}_{18}$$

for guiding means 8 and sound wave 10
and

$$\rightarrow \theta_{11} = 90° - \text{angle}_{19} \tag{9b}$$

for guiding means 9 and sound wave 11.

Furthermore the elements of the guiding means 8, 9 can comprise an acoustic lens for a further improvement of the directionality of the sound waves 10, 11. The reflective and/or diffractive elements of the guiding means 8, 9 may be provided in a convex-shaped arrangement.

Moreover the reflective and/or diffractive elements of the guiding means 8, 9 can be provided in an array structure such that a two-dimensional array of diffractive and/or reflective elements constitute the guiding means 8, 9.

Advantageously the elements of the guiding means 8, 9 are injection-moulded together with the grill 7 attached to the housing 5, 6 of a television set.

**Claims**

1. A sound generating device, which is arranged in a housing (5, 6) together with an image generating device (12), the image generating device defining an observation axis (A-A'), wherein the sound generating device comprises a sound generator (1)which is arranged in said housing (5, 6); and provided with a transducer (2) for generating sound waves (10, 11) in response to an input signal (13); and guiding means (8, 9) for guiding the generated sound waves (10, 11) to the outside of the housing (5, 6), wherein the guiding means (8, 9) is acoustically coupled to the transducer (2) of the sound generator (1) such that an acoustic coupling between the sound generator (1) and the guiding means (8, 9) is provided, and wherein the guiding means (8, 9) has structure sizes in the order of the wavelength of high frequency sound waves (10, 11)
**characterized in that**
the guiding means consists of an array of reflective and/or diffractive elements,

wherein a plane wave front of the generated sound waves (10, 11) is reflected/diffracted into predetermined deflection angles (18, 19) by the reflective and/or diffractive elements such that the deflection angle (18, 19) provided by the elements decreases in propagation direction of the sound wave (10, 11) with respect to the observation axis (A-A').

2. A sound generating device according to claim 1, **characterized in that** the sound generator comprises at least one loudspeaker for generating audible sound.

3. A sound generating device according to claim 1 or 2, **characterized in that** a diffusor element (17) is provided facing the transducer (2) of the sound generator (1) such that high frequency sound waves (20) are reflected back to the transducer (2).

4. A sound generating device according to claim 1 or 2, **characterized in that** a grill (7) is provided between the sound generator (1) and the guiding means (8, 9) for transmitting the generated sound waves (10, 11) to the outside of the housing (5, 6).

5. A sound generating device according to claim 4, **characterized in that** the grill (7) is provided as a diffractive element for diffracting the generated sound (10, 11) waves into predetermined directions.

6. A sound generating device according to claim 1, **characterized in that** the input signal (13) is an electrical signal the energy of which is operating the transducer (2) of the sound generator (1) for generating sound waves (10, 11).

7. A sound generating device according to claim 1, 2 or 6, **characterized in that** the transducer (2) is provided as a voice coil and is capable of generating sound waves at high frequencies.

8. A sound generating device according to claim 1, 4 or 5, **characterized in that** the grill (7) and the guiding means (8, 9) are made as a single component.

9. A sound generating device according to claim 1, 4, 5 or 8, **characterized in that** the guiding means (8, 9) is variable for an adjustment of the deflection angle (18, 19) and/or a directionality of the transmitted sound waves (10, 11).

10. A sound generating device according to claim 1, 4, 5, 8 or 9, **characterized in that** the guiding means (8, 9) consists of at least two diffractive elements for diffracting the sound waves (10, 11) into the respective deflection angles (18, 19).

11. A sound generating device according to claim 1, 4, 5, 8 or 9 **characterized in that** the guiding means (8, 9) consists of at least two reflective element for reflecting the sound waves (10, 11) into the respective deflection angles (18, 19).

12. A sound generating device according to claim 1, 4, 5, 8, 9, 10 or 11 **characterized in that** the guiding means (8, 9) comprises an acoustic lens.

13. A sound generating device according to claim 1, **characterized in that** the reflective and/or diffractive elements of the guiding means (8, 9) are arranged such that the area of the elements decreases in propagation direction of the sound wave (10, 11).

14. A sound generating device according to claim 1, 4, 5, 8, 9, 10 or 11, **characterized in that** the reflective and/or diffractive elements of the guiding means (8, 9) are convex-shaped.

15. A sound generating device according to claim 1, 4, 5, 8, 9, 10 or 11 **characterized in that** the reflective and/or diffractive elements of the guiding means (8, 9) are provided as fins and/or baffles.

16. A sound generating device according to claim 1, 4, 5, 8, 9, 10 or 11 **characterized in that** the reflective and/or diffractive elements of the guiding means (8, 9) have a curved surface structure.

17. A sound generating device according to claim 1, **characterized in that** the deflection angle (18, 19) provided by the reflective and/or diffractive elements of the guiding means (8, 9) for deflecting the sound waves (10, 11) varies between 0 degrees and less than 90 degrees with respect to the observation axis (A-A').

18. A sound generating device according to claim 1, 4, 5, 8, 9, 10 or 11, **characterized in that** the guiding means (8, 9) is an injection-molded portion of the housing (5, 6) and/or the grill (7).

**19.** A television set having a sound generating device according to claims 1-18.

**20.** A monitor system having a sound generating device according to claims 1-18.

**21.** A method for generating sound waves (10, 11) comprising the following steps:

providing an input signal (13) for a transducer (2) of a sound generator (1) which is arranged in a housing (5, 6) together with an image generating device (12), the image generating device defining an observation axis (A-A'); converting the input signal (13) into at least one sound wave (10, 11) by means of the transducer (2); and guiding the sound wave (10, 11) to the outside of the housing (5, 6) by guiding means (8, 9), wherein the guiding means (8, 9) is acoustically coupled to the transducer (2) of the sound generator (1); and wherein the guiding means (8, 9) has structure sizes in the order of the wavelength of high frequency sound waves (10, 11),

**characterized in that**
the guiding means consists of an array of reflective and/or diffractive elements, wherein a plane wave front of the generated sound waves is reflected/diffracted into a predetermined deflection angle (18, 19) by the reflective and/or diffractive elements such that the deflection angle (18, 19) provided by the elements decreases in propagation direction of the sound wave (10, 11) with respect to the observation axis (A-A').

**22.** A method according to claim 21, **characterized in that** audible sound is generated by a loudspeaker comprised by the sound generator.

**23.** A method according to claim 12 or 22,
**characterized in that** high frequency sound waves (20) are reflected back to the transducer (2) by means of a diffusor element (17) which is provided facing the transducer (2) of the sound generator (1).

**24.** A method according to claim 21 or 22, **characterized in that** the sound wave (10, 11) is transmitted to the outside of the housing (5, 6) by means of a grill (7) which is provided between the sound generator (1) and the guiding means (8, 9).

**25.** A method according to claim 24, **characterized in that** the sound wave (10, 11) is diffracted by means of the grill (7) which is provided as a diffractive element for diffracting the sound wave (10, 11) in predetermined directions.

**26.** A method according to claim 21, **characterized in that** the transducer (2) of the sound generator (1) is operated by an electrical input signal (13).

**27.** A method according to claim 21, **characterized in that** the guiding means (8, 9) is varied to adjust the deflection angle (18, 19) and/or a directionality of the transmitted sound waves (10, 11).

**28.** A method according to claim 21, **characterized in that** the sound wave (10, 11) is diffracted into the predetermined deflection angles (18, 19) by means of at least two diffractive element of the guiding means (8, 9) .

**29.** A method according to claim 21, **characterized in that** the sound wave (10, 11) is reflected into the predetermined deflection angles (18, 19) by means of at least two reflective element of the guiding means (8, 9).

**30.** A method according to claim 21, **characterized in that** the sound waves (10, 11) are deflected by an deflection angle (18, 19) between 0 degrees and less than 90 degrees with respect to the observation axis (A-A') by means of the reflective and/or diffractive elements of the guiding means (8, 9).

**Patentansprüche**

**1.** Tonerzeugungsvorrichtung, die in einem Gehäuse (5, 6) zusammen mit einer Bilderzeugungsvorrichtung (12) angeordnet ist, wobei die Bilderzeugungsvorrichtung eine Beobachtungsachse (A-A') definiert, wobei die Tonerzeugungsvorrichtung umfasst

einen Schallgenerator (1), der in dem Gehäuse (5, 6) angeordnet ist, und mit einem Wandler (2) zum Erzeugen von Schallwellen (10, 11) in Reaktion auf ein Eingangssignal (13) versehen ist;

und Führungsmittel (8, 9) zum Leiten der erzeugten Schallwellen (10, 11) nach außerhalb des Gehäuses (5, 6), wobei das Führungsmittel (8, 9) akustisch mit dem Wandler (2) des Schallgenerators (1) so gekoppelt ist, dass eine akustische Kopplung zwischen dem Schallgenerator (1) und dem Führungsmittel (8, 9) bereitgestellt ist, und wobei das Führungsmittel (8, 9) Strukturgrößen in der Größenordnung der Wellenlänge von Hochfrequenzschallwellen (10, 11) aufweist

**dadurch gekennzeichnet, dass**

das Führungsmittel aus einem Raster reflektiver und/oder diffraktiver Elemente besteht,

wobei eine ebene Wellenfront der erzeugten Schallwellen (10, 11) durch die reflektiven und/oder diffraktiven Elemente so in vorbestimmte Ablenkwinkel (18, 19) reflektiert/gestreut wird, dass der Ablenkwinkel (18, 19), der durch diese Elemente bereitgestellt wird, in Ausbreitungsrichtung der Schallwelle (10, 11) in Bezug auf die Beobachtungsachse (A-A') abnimmt.

2. Schallerzeugungsvorrichtung gemäß Anspruch 1, **dadurch gekennzeichnet, dass** der Schallgenerator zumindest einen Lautsprecher zum Erzeugen hörbaren Schalls umfasst.

3. Schallerzeugungsvorrichtung gemäß Anspruch 1 oder 2, **dadurch gekennzeichnet, dass** ein Diffusorelement (17) vorgesehen ist, das zum Wandler (2) des Schallgenerators (1) weist, so das Hochfrequenzschallwellen (20) zum Wandler (2)- zurück reflektiert werden.

4. Schallerzeugungsvorrichtung gemäß Anspruch 1 oder 2, **dadurch gekennzeichnet, dass** ein Gitter (7) zwischen dem Schallgenerator (1) und dem Führungsmittel (8, 9) zum Übertragen der erzeugten Schallwellen (10, 11) nach außerhalb des Gehäuses (5, 6) vorgesehen ist.

5. Schallerzeugungsvorrichtung gemäß Anspruch 4, **dadurch gekennzeichnet, dass** das Gitter (7) als diffraktives Element zum Zerstreuen der erzeugten Schallwellen (10, 11) in vorbestimmte Richtungen vorgesehen ist.

6. Schallerzeugungsvorrichtung gemäß Anspruch 1, **dadurch gekennzeichnet, dass** das Eingangssignal (13) ein elektrisches Signal ist, dessen Energie den Wandler (2) des Schallgenerators (1) zum Erzeugen von Schallwellen (10, 11) antreibt.

7. Schallerzeugungsvorrichtung gemäß Anspruch 1, 2 oder 6, **dadurch gekennzeichnet, dass** der Wandler (2) als eine Schwingspule vorgesehen ist, und zur Erzeugung von Schallwellen bei hohen Frequenzen fähig ist.

8. Schallerzeugungsvorrichtung gemäß Anspruch 1, 4 oder 5, **dadurch gekennzeichnet, dass** das Gitter (7) und das Führungsmittel (8, 9) als eine einzelne Komponente hergestellt sind.

9. Schallerzeugungsvorrichtung gemäß Anspruch 1, 4, 5 oder 8, **dadurch gekennzeichnet, dass** das Führungsmittel (8, 9) zum Einstellen des Ablenkwinkels (18, 19) und/oder einer Direktionalität der übertragenen Schallwellen (10, 11) variabel ist.

10. Schallerzeugungsvorrichtung gemäß Anspruch 1, 4, 5, 8 oder 9, **dadurch gekennzeichnet, dass** das Führungsmittel (8, 9) aus zumindest zwei diffraktiven Elementen zum Zerstreuen der Schallwellen (10, 11) in die entsprechenden Ablenkwinkel (18, 19) besteht.

11. Schallerzeugungsvorrichtung gemäß Anspruch 1, 4, 5, 8 oder 9, **dadurch gekennzeichnet, dass** das Führungsmittel (8, 9) aus zumindest zwei reflektiven Elementen zum Reflektieren der Schallwellen (10, 11) in die jeweiligen Ablenkwinkel (18, 19) besteht.

12. Schallerzeugungsvorrichtung gemäß Anspruch 1, 4, 5, 8, 9, 10 oder 11, **dadurch gekennzeichnet, dass** das Führungsmittel (8, 9) eine akustische Linse umfasst.

13. Schallerzeugungsvorrichtung gemäß Anspruch 1, **dadurch gekennzeichnet, dass** die reflektiven und/oder diffraktiven Elemente des Führungsmittels (8, 9) so angeordnet sind, dass die Fläche der Elemente in Ausbreitungsrichtung der Schallwelle (10, 11) abnimmt.

14. Schallerzeugungsvorrichtung gemäß Anspruch 1, 4, 5, 8, 9, 10 oder 11, **dadurch gekennzeichnet, dass** die reflektiven oder diffraktiven Elemente des Führungsmittels (8, 9) konvex geformt sind.

15. Schallerzeugungsvorrichtung gemäß Anspruch 1, 4, 5, 8, 9, 10 oder 11, **dadurch gekennzeichnet, dass** die reflektiven und/oder diffraktiven Elemente des Führungsmittels (8, 9) als Rippen und/oder Ablenkplatten vorgesehen sind.

16. Schallerzeugungsvorrichtung gemäß Anspruch 1, 4, 5, 8, 9, 10 oder 11, **dadurch gekennzeichnet, dass** die reflektiven und/oder diffraktiven Elemente des Führungsmittels (8, 9) eine gekrümmte Oberflächenstruktur aufweisen.

17. Schallerzeugungsvorrichtung gemäß Anspruch 1, **dadurch gekennzeichnet, dass** der Ablenkwinkel (18, 19), der durch die reflektiven und/oder diffraktiven Elemente des Führungsmittels (8, 9) zum Ablenken der Schallwellen (10, 11) bereitgestellt ist, zwischen 0 Grad und weniger als 90 Grad in Bezug auf die Beobachtungsachse (A-A') variiert.

18. Schallerzeugungsvorrichtung gemäß Anspruch 1, 4, 5, 8, 9, 10 oder 11, **dadurch gekennzeichnet, dass** das Führungsmittel (8, 9) ein Spritzgussteil des Gehäuses (5, 6) und/oder des Gitters (7) ist.

19. Fernseher mit einer Schallerzeugungsvorrichtung gemäß den Ansprüchen 1 bis 18.

20. Monitorsystem mit einer Schallerzeugungsvorrichtung gemäß Ansprüchen 1 bis 18.

21. Verfahren zum Erzeugen von Schallwellen (10, 11), umfassend die folgenden Schritte:

Bereitstellen eines Eingangssignals (13) für einen Wandler (2) eines Schallgenerators (1), der in einem Gehäuse (5, 6) zusammen mit einer Bilderzeugungsvorrichtung (12) angeordnet ist, wobei die Bilderzeugungsvorrichtung eine Beobachtungsachse (A-A') definiert;
Umwandeln des Eingangssignals (13) in zumindest eine Schallwelle (10, 11) mittels des Wandlers (2); und
Leiten der Schallwelle (10, 11) nach außerhalb des Gehäuses (5, 6) durch Führungsmittel (8, 9), wobei das Führungsmittel (8, 9) akustisch mit dem Wandler (2) des Schallgenerators (1) gekoppelt ist; und
wobei das Führungsmittel (8, 9) Strukturgrößen in der Größenordnung in der Wellenlänge von Hochfrequenzschallwellen (10, 11) aufweist,

**dadurch gekennzeichnet, dass**
das Führungsmittel aus einem Raster reflektiver und/oder diffraktiver Elemente besteht,
wobei eine ebene Wellenfront der erzeugten Schallwellen in einem vorbestimmten Ablenkwinkel (18, 19) durch die reflektiven und/oder diffraktiven Elemente so reflektiert/zerstreut wird, dass der Ablenkwinkel (18, 19), der durch die Elemente bereitgestellt wird, in Ausbreitungsrichtung der Schallwelle (10, 11) in Bezug auf die Beobachtungsachse (A-A') abnimmt.

22. Verfahren gemäß Anspruch 21, **dadurch gekennzeichnet, dass** hörbarer Schall durch einen im Schallgenerator umfassten Lautsprecher erzeugt wird.

23. Verfahren gemäß Anspruch 12 oder 22, **dadurch gekennzeichnet, dass** Hochfrequenzschallwellen (20) zum Wandler (2) mittels eines Diffusorelements (17) zurück reflektiert werden, was zum Wandler (2) des Schallgenerators (1) hinweisend bereitgestellt ist.

24. Verfahren gemäß Anspruch 21 oder 22, **dadurch gekennzeichnet, dass** die Schallwelle (10, 11) nach außerhalb des Gehäuses (5, 6) mittels eines Gitters (7) gesendet wird, das zwischen dem Schallgenerator (1) und dem Führungsmittel (8, 9) bereitgestellt ist.

25. Verfahren gemäß Anspruch 24, **dadurch gekennzeichnet, dass** die Schallwelle (10, 11) mittels des Gitters (7) zerstreut wird, das als diffraktives Element zum Zerstreuen der Schallwelle (10, 11) in vorbestimmte Richtungen bereitgestellt ist.

26. Verfahren gemäß Anspruch 21, **dadurch gekennzeichnet, dass** der Wandler (2) des Schallgenerators (1) durch ein elektrisches Eingangssignal (13) betrieben wird.

27. Verfahren gemäß Anspruch 21, **dadurch gekennzeichnet, dass** das Führungsmittel (8, 9) variiert wird, um den Ablenkwinkel (18, 19) und/oder eine Direktionalität der gesendeten Schallwellen (10, 11) einzustellen.

28. Verfahren gemäß Anspruch 21, **dadurch gekennzeichnet, dass** die Schallwelle (10, 11) in vorbestimmte Ablenkwinkel (18, 19) mittels zumindest zweier diffraktiver Elemente des Führungsmittels (8, 9) zerstreut wird.

29. Verfahren gemäß Anspruch 21, **dadurch gekennzeichnet, dass** die Schallwelle (10, 11) in die vorbestimmten Ablenkwinkel (18, 19) mittels zumindest zweier reflektiver Elemente des Führungsmittels (8, 9) reflektiert wird.

30. Verfahren gemäß Anspruch 21, **dadurch gekennzeichnet, dass** die Schallwellen (10, 11) durch einen Ablenkwinkel (18, 19) zwischen 0 Grad und weniger als 90 Grad in Bezug auf die Beobachtungsachse (A-A') mittels der reflektiven und/oder diffraktiven Elemente des Führungsmittels (8, 9) abgelenkt werden.

**Revendications**

1. Dispositif de génération de sons, qui est agencé dans un boîtier (5, 6) en même temps qu'un dispositif (12) de génération d'images, le dispositif de génération d'images définissant un axe d'observation (A-A'), où le dispositif de génération de sons comprend
un générateur (1) de sons qui est agencé dans ledit boîtier (5, 6) ; et qui est muni d'un transducteur (2) pour générer des ondes sonores (10, 11) en réponse à un signal (13) d'entrée ;
et un moyen de guidage (8, 9) pour guider les ondes sonores générées (10, 11) à l'extérieur du boîtier (5, 6), où le moyen de guidage (8, 9) est acoustiquement couplé au transducteur (2) du générateur (1) de sons de façon à ce qu'un couplage acoustique entre le générateur (1) de sons et le moyen de guidage (8, 9) soit prévu, et où le moyen de guidage (8, 9) a des tailles de structure dans l'ordre de la longueur d'onde des ondes sonores (10, 11) haute fréquence
**caractérisé en ce que**
le moyen de guidage est constitué d'un réseau d'éléments diffractifs et/ou réfléchissants,
où un front d'onde plane des ondes sonores générées (10, 11) est réfléchie/diffractée dans des angles de déflexion prédéterminés (18, 19) par les éléments diffractifs et/ou réfléchissants de façon à ce que l'angle de déflexion (18, 19) prévu par les éléments diminue dans la direction de propagation de l'onde sonore (10, 11) par rapport à l'axe d'observation (A-A').

2. Dispositif de génération de sons selon la revendication 1, **caractérisé en ce que** le générateur de sons comprend au moins un haut-parleur pour générer un son audible.

3. Dispositif de génération de sons selon la revendication 1 ou 2, **caractérisé en ce qu'**un élément de diffusion (17) est prévu en vis-à-vis du transducteur (2) du générateur (1) de sons de façon à ce que les ondes sonores (20) haute fréquence soient renvoyées vers le transducteur (2).

4. Dispositif de génération de sons selon la revendication 1 ou 2, **caractérisé en ce qu'**une grille (7) est prévue entre le générateur (1) de sons et le moyen de guidage (8, 9) pour transmettre les ondes sonores générées (10, 11) à l'extérieur du boîtier (5, 6).

5. Dispositif de génération de sons selon la revendication 4, **caractérisé en ce que** la grille (7) est prévue comme un élément diffractif pour diffracter les ondes sonores générées (10, 11) dans des directions prédéterminées.

6. Dispositif de génération de sons selon la revendication 1, **caractérisé en ce que** le signal (13) d'entrée est un signal électrique dont l'énergie fait fonctionner le transducteur (2) du générateur (1) de sons pour générer des ondes sonores (10, 11).

7. Dispositif de génération de sons selon la revendication 1, 2 ou 6, **caractérisé en ce que** le transducteur (2) est prévu comme une bobine acoustique et est capable de générer des ondes sonores à hautes fréquences.

8. Dispositif de génération de sons selon la revendication 1, 4 ou 5, **caractérisé en ce que** la grille (7) et le moyen de guidage (8, 9) sont fabriqués en une seule pièce.

9. Dispositif de génération de sons selon la revendication 1, 4, 5 ou 8, **caractérisé en ce que** le moyen de guidage (8, 9) est variable pour régler l'angle de déflexion (18, 19) et/ou une directionnalité des ondes sonores transmises (10, 11).

10. Dispositif de génération de sons selon la revendication 1, 4, 5, 8 ou 9, **caractérisé en ce que** le moyen de guidage (8, 9) est composé d'au moins deux éléments diffractifs pour diffracter les ondes sonores (10, 11) dans les angles de déflexion respectifs (18, 19).

11. Dispositif de génération de sons selon la revendication 1, 4, 5, 8 ou 9, **caractérisé en ce que** le moyen de guidage (8, 9) est composé d'au moins deux éléments réfléchissants pour réfléchir les ondes sonores (10, 11) dans les angles de déflexion respectifs (18, 19).

12. Dispositif de génération de sons selon la revendication 1, 4, 5, 8, 9, 10 ou 11, **caractérisé en ce que** le moyen de guidage (8, 9) comprend une lentille acoustique.

13. Dispositif de génération de sons selon la revendication 1, **caractérisé en ce que** les éléments diffractifs et/ou réfléchissants du moyen de guidage (8, 9) sont agencés de façon à ce que la surface des éléments diminue dans la direction de propagation de l'onde sonore (10, 11).

14. Dispositif de génération de sons selon la revendication 1, 4, 5, 8, 9, 10 ou 11, **caractérisé en ce que** les éléments diffractifs et/ou réfléchissants du moyen de guidage (8, 9) ont une forme convexe.

15. Dispositif de génération de sons selon la revendication 1, 4, 5, 8, 9, 10 ou 11, **caractérisé en ce que** les éléments diffractifs et/ou réfléchissants du moyen de guidage (8, 9) sont prévus comme des ailettes et/ou chicanes.

16. Dispositif de génération de sons selon la revendication 1, 4, 5, 8, 9, 10 ou 11, **caractérisé en ce que** les éléments diffractifs et/ou réfléchissants du moyen de guidage (8, 9) ont une structure de surface courbée.

17. Dispositif de génération de sons selon la revendication 1, **caractérisé en ce que** l'angle de déflexion (18, 19) prévu par les éléments diffractifs et/ou réfléchissants du moyen de guidage (8, 9) pour dévier les ondes sonores (10, 11) varie entre 0 degrés et moins de 90 degrés par rapport à l'axe d'observation (A-A').

18. Dispositif de génération de sons selon la revendication 1, 4, 5, 8, 9, 10 ou 11, **caractérisé en ce que** le moyen de guidage (8, 9) est une partie moulée par injection du boîtier (5, 6) et/ou la grille (7).

19. Poste de télévision ayant un dispositif de génération de sons selon les revendications 1-18.

20. Système de surveillance ayant un dispositif de génération de sons selon les revendications 1-18.

21. Procédé de génération d'ondes sonores (10, 11) comprenant les étapes suivantes qui consistent :

    à fournir un signal (13) d'entrée pour un transducteur (2) d'un générateur (1) de sons qui est agencé dans un boîtier (5, 6) en même temps qu'un dispositif (12) de génération d'images, le dispositif de génération d'images définissant un axe d'observation (A-A') ;
    à convertir le signal (13) d'entrée en au moins une onde sonore (10, 11) au moyen du transducteur (2) ; et
    à guider l'onde sonore (10, 11) à l'extérieur du boîtier (5, 6) par le moyen de guidage (8, 9), où le moyen de guidage (8, 9) est acoustiquement couplé au transducteur (2) du générateur (1) de sons ; et
    où le moyen de guidage (8, 9) a des tailles de structure dans l'ordre de la longueur d'onde des ondes sonores (10, 11) haute fréquence,

    **caractérisé en ce que**
    le moyen de guidage est composé d'un réseau d'éléments diffractifs et/ou réfléchissants,
    où un front d'onde plane des ondes sonores générées est réfléchie/diffractée dans un angle de déflexion prédéterminé (18, 19) par les éléments diffractifs et/ou réfléchissants de façon à ce que l'angle de déflexion (18, 19) prévu par les éléments diminue dans la direction de propagation de l'onde sonore (10, 11) par rapport à l'axe d'observation (A-A').

22. Procédé selon la revendication 21, **caractérisé en ce qu'**un son audible est généré par un haut-parleur compris par le générateur de sons.

**23.** Procédé selon la revendication 12 ou 22, **caractérisé en ce que** des ondes sonores (20) haute fréquence sont renvoyées vers le transducteur (2) au moyen d'un élément de diffusion (17) qui est prévu en vis-à-vis du transducteur (2) du générateur (1) de sons.

**24.** Procédé selon la revendication 21 ou 22, **caractérisé en ce que** l'onde sonore (10, 11) est transmise à l'extérieur du boîtier (5, 6) au moyen d'une grille (7) qui est prévue entre le générateur (1) de sons et le moyen de guidage (8, 9).

**25.** Procédé selon la revendication 24, **caractérisé en ce que** l'onde sonore (10, 11) est diffractée au moyen de la grille (7) qui est prévue comme un élément diffractif pour diffracter l'onde sonore (10, 11) dans des directions prédéterminées.

**26.** Procédé selon la revendication 21, **caractérisé en ce que** le transducteur (2) du générateur (1) de sons est fait fonctionner par un signal d'entrée électrique (13).

**27.** Procédé selon la revendication 21, **caractérisé en ce que** le moyen de guidage (8, 9) varie pour régler l'angle de déflexion (18, 19) et/ou la directionnalité des ondes sonores transmises (10, 11).

**28.** Procédé selon la revendication 21, **caractérisé en ce que** l'onde sonore (10, 11) est diffractée dans les angles de déflexion prédéterminés (18, 19) au moyen d'au moins deux éléments diffractifs du moyen de guidage (8, 9).

**29.** Procédé selon la revendication 21, **caractérisé en ce que** l'onde sonore (10, 11) est réfléchie dans les angles de déflexion prédéterminés (18, 19) au moyen d'au moins deux éléments réfléchissants du moyen de guidage (8, 9).

**30.** Procédé selon la revendication 21, **caractérisé en ce que** les ondes sonores (10, 11) sont déviées par un angle de déflexion (18, 19) entre 0 degrés et moins de 90 degrés par rapport à l'axe d'observation (A-A') au moyen des éléments diffractifs et/ou réfléchissants du moyen de guidage (8, 9).

# Fig. 1

# Fig. 2a

# Fig. 2b

# Fig. 3
## (PRIOR ART)

**EP 1 509 063 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 5452025 A
- EP 0492919 A2
- JP 61184093 A